# EUROPÄISCHE PATENTSCHRIFT

(11) **EP 0 415 050 B1**
(45) Veröffentlichungstag und Bekanntmachung des Hinweises auf die Patenterteilung: **24.05.1995**
(21) Anmeldenummer: 90113633.3
(22) Anmeldetag: 17.07.1990
(51) Int. Cl.: F16G 13/16

(54) **Energieführungskette**
Supporting chain for energy carriers
Chaîne porteuse pour lignes de transport d'énergie

(30) Priorität: 26.08.1989 DE 3928238
(43) Veröffentlichungstag der Anmeldung: 06.03.1991
(73) Patentinhaber: Kabelschlepp Gesellschaft mit beschränkter Haftung, 57074 Siegen (DE)
(72) Erfinder: Moritz, Werner, D-5900 Siegen (DE); Jud, Volker, D-5901 Wilnsdorf (DE); Weber, Willibald, D-5902 Netphen (DE)
(74) Vertreter: Kahlhöfer, Hermann, Dipl.-Phys.

(56) Entgegenhaltungen:
- EP-A- 0 246 502
- DE-A- 2 656 585
- DE-B- 2 255 283
- DE-B- 2 360 227
- DE-B- 2 417 353
- DE-U- 8 910 220

## Beschreibung

Gegenstand der Erfindung ist ein Bausatz für eine Energieführungskette mit aus zwei im Abstand voneinander und parallel zueinander angeordneten Kettenlaschen und diese miteinander verbindenden Traversen bestehenden Kettengliedern, deren gegenseitiger Schwenkwinkel mit Anschlageinsätzen begrenzt ist, deren freie Seiten mit an den Traversen befestigten Deckplatten abgedeckt sind und deren Endglieder mittels Konsolen an einem Ende mit einem festen Anschluß und an anderen Ende mit einem beweglichen Verbraucher verbunden sind.

Aus der DE-B-23 60 227 ist eine Energieführungskette bekannt, bei welcher der gegenseitige Schwenkwinkel der Kettenglieder mit Anschlageinsätzen begrenzt ist. Diese Anschlageinsätze sind in um die Schwenkachse gekrümmte Langlöcher lose eingelegt. Ein Nachteil dieser an sich gut funktionierenden Schwenkwinkelbegrenzung besteht darin, daß die Anschlageinsätze bei der Montage vertauscht werden können und nach der Montage nicht mehr feststellbar ist, ob auch in allen Langlöchern die richtigen Anschlageinsätze angeordnet sind.

Aus der DE-B-22 55 283 ist eine Energieführungskette bekannt, deren Kettenlaschen mit Traversen verbunden sind, die einen abgeflachten Querschnitt mit abgerundeten Schmalseiten haben und in mit Hinterschneidungen versehene, angeschnittene Ausnehmungen der Kettenlaschen bzw. von Trennstegen eingelegt und durch Verdrehen um ihre Längsachse kraft- und formschlüssig mit den Kettenlaschen bzw. Trennstegen verspannbar sind. Diese Trennstege haben sich in der Praxis bewährt, aber bei Energieführungsketten für größere Längen und Traggewichte ist die Stabilität der Traversen manchmal nicht ausreichend.

Aus der DE-B 24 17 353 ist eine Energieführungskette bekannt, deren Kettenlaschen mit Traversen verbunden sind, in welche elastisch deformierbare Klemmlippen aus weichem Kunststoff eingesetzt sind, zwischen denen die Energieleitungen eingeklemmt werden können. Diese Technik zum Festlegen von Energieleitungen mit unterschiedlichem Durchmesser kann nur für eine bestimmte Bandbreite der voneinander differierenden Durchmesser gut funktionieren. Für extrem große und kleine Durchmesser ist diese Klemmlippenkonstruktion weniger geeignet.

Aus der EP-A 0 246 502 ist ein gatlungsgleiche Bausatz für eine Energieführungskette bekannt, die an der Ober- und Unterseite mit an den Traversen befestigten Deckplatten abgedeckt ist. Bei einer Ausführungsform werden die im Bereich der Gelenkachsen angeordneten und den Spalt zwischen den Deckplatten benachbarter Kettenglieder überbrückenden, gekrümmten Abdeckelemente an ihren Stirnseiten in Ausnehmungen der Kettenlaschen geführt. Bei einer anderen Ausführungsform sind die gekrümmten Abdeckelemente einteilig an einer Seite der mit den Traversen verbundenen Deckplatten angeformt. Die erste Ausführungsform erfordert eine entsprechende Konstruktion der Kettenlaschen und bei der zweiten Ausführungsform ist der Bereich zwischen den Deckplatten und Abdeckelementen bruchgefährdet.

Ausgehend von diesem Stand der Technik liegt der Erfindung die Aufgabe zugrunde, eine Energieführungskette zu schaffen, die im Baukastenprinzip mit verschiedenen Traversen, Krümmungsradien, Stegen, Abdeckungen und Anschlußstücken zwecks Anpassung an die verschiedenen Anwendungsfälle ausgerüstet werden kann.

Als technische Lösung wird ein Bausatz für eine Energieführungskette vorgeschlagen, der folgende weitere Bausatzelement aufweist
a) Traversen (4, 25), die mit einem zwischen den Kettenlaschen (1,2) befindlichen Bereich vergrößerten Querschnitts in asymmetrischer oder symmetrischer Form versehen sind;
b) Bürsten (28), die in Verbindung mit Traversen (4, 25) angebracht sind und nach innen vorspringende Borsten aufweisen;
c) Anschlußstücke (21), die mit einem Ende in Taschen (20) der Kettenendglieder (18, 19) passend einsteckbar sind;
d) Trennstege (30), die an den Traversen (3, 4, 25) befestigbar sind und
e) Sprossen (31), die in Querrichtung zu den Trennstegen (30) angeordnet werden können;
f) Gleitkufen (37), die auf Schmalseiten der Kettenlaschen (1,2) aufsteckbar sind:
g) Anschlageinsätze (10), die in korrespondierende Ausnehmungen (9) der Kettenlaschen (1,2) ortsfest eingreifen und mindestens paarweise über Stege (11) miteinander verbunden sind; und
h) Deckplatten (32), die an den Traversen (3,4) befestigt sein und
i) Abdeckelemente (34) aufweisen können, die gekrümmt und teleskopartig angeordnet sind.

Die Aufgabe wird auch gelöst durch eine aus Bauteilen des Bausatzes aufgebaute Energieführungskette nach Anspruch 12.

Bei einer praktischen Ausführungsform können die Traversen zwischen den Kettenlaschen ein asymmetrisch verbreitertes Profil haben oder auch symmetrisch ausgebildet und an ihrer Innenseite mit einer T-förmigen Nut zum Befestigen einer Bürste versehen sein, deren Enden sich beiderseits der neutralen Ebene eines Kettengliedes gegenüberstehen. In der ersten Variante vergrößern die Traversen die Stabilität der Kettenglieder. In der zweiten Variante vergrößern sie ebenfalls die Stabilität der Kettenglieder und erlauben zusätzlich das Einsetzen von Bürsten, so daß Energieleitungen mit extrem unterschiedlichem Durchmesser eingelegt und während des Betriebs der Energieführungskette getrennt voneinander gehalten werden können.

Das Verbinden der Anschlageinsätze über Stege zu einem Anschlagring oder auch das Verbinden von wenigstens zwei Anschlageinsätzen benachbarter Langlöcher mit einem Steg hat den Vorteil, daß es nicht mehr zu einem Vertauschen der Anschlageinsätze kommen kann, weil sie immer nur in der gleichen Lage mit ihrem Steg in die entsprechendem Ausnehmungen zwischen den Langlöchern der Kettenlaschen passen. Zur weiteren Verbesserung wird vorgeschlagen, die Anschlageinsätze zusätzlich mit runden Köpfen zu versehen und in den Kettenlaschen im Bereich der Langlöcher runde Öffnungen vorzusehen, in welche die runden Köpfe der Anschlageinsätze eingreifen und dann bei fertig montierter Energieführungskette von außen sichtbar sind. Die runden Köpfe können auf ihrer Sichtseite für verschiedene Krümmungsradien mit Schriftzeichen oder auch farbig gekennzeichnet werden. Auf diese Weise ist nach der Montage sofort erkennbar, in welcher Gelenkvorbindung Anschlageinsätze fehlen oder die falschen Anschlageinsätze verwendet worden sind.

In weiterer Ausgestaltung der Erfindung wird vorgeschlagen, daß die Deckplatten an einer Längsseite zweischalig ausgebildet sind und einen Aufnahmeschlitz für ein gekrümmtes Abdeckelement haben. Die gekrümmten Abdeckelemente können dann von der Stirnseite her in die Deckplatten eingeschoben werden. Damit die gekrümmten Abdeckelemente nicht aus dem Aufnahmeschlitz der Deckplatten herausrutschen können, werden sie zweckmäßig an beiden Längsseiten mit Anschlagleisten versehen, von denen eine den Aufnahmeschlitz der Deckplatte nicht passieren kann und die andere die benachbarte Deckplatte untergreift. Damit die gekrümmten Abdeckelemente im Aufnahmeschlitz der Deckplatten und in Anlage an den benachbarten Deckplatten geführt werden, können an den Innenseiten der Kettenlaschen Abstützprofile engeformt sein, welche die Stirnseiten der gekrümmten Abdeckelemente untergreifen.

Schließlich wird noch vorgeschlagen, im Bereich der Taschen an den Endgliedern Bohrungen zum Verschrauben der einsteckbaren Anschlußstücke vorzusehen.

Eine nach dieser technischen Lehre ausgebildete Energieführungskette kann in mehrfacher Hinsicht komplettiert und für bestimmte Anwendungsfälle optimiert werden. So ist es möglich, anstelle einfacher Traversen die Stabilität vergrößernde Traversen in Verbindung mit den gleichen Kettenlaschen zu verwenden. Wenn es notwendig ist, Energieleitungen mit extrem verschiedenen Durchmessern getrennt voneinander zu halten und zu führen können in die Traversen nach innen vorspringende Bürsten eingesetzt werden, deren Borsten die Energieleitungen schonend umgreifen und auf Distanz halten. Wenn die Energieführungskette eingekapselt werden soll, um die Energieleitungen gegen heiße Späne und/oder Staub zu schützen, dann können die Deckplatte mit den teleskopartig angeordneten Abdeckelementen von außen auf die Traversen aufgesteckt werden. Die von Fall zu Fall wechselnden Anschlußsituationen für die Endglieder können mit verschieden geformten Anschlußstücken beherrscht werden, die an einem Ende jeweils ein in die Taschen der Endglieder passendes Einsteckende haben.

Weitere Einzelheiten und Vorteile ergeben sich aus der nachfolgenden Beschreibung der zugehörigen Zeichnungen, in denen die verschiedenen Ausführungsformen schematisch dargestellt worden sind. In den Zeichnungen zeigen:
- Fig. 1: ein Sprengbild eines Kettengliedes mit einer asymmetrisch verbreiterten Traverse in perspektivischer Darstellung;
- Fig. 2: ein Sprengbild von zwei benachbarten Kettenlaschen mit dazwischen angeordneten, ringförmig verbundenen Anschlageinsätzen in perspektivischer Darstellung;
- Fig. 3: zwei mit einem Steg verbundene Anschlageinsätze in perspektivischer Darstellung;

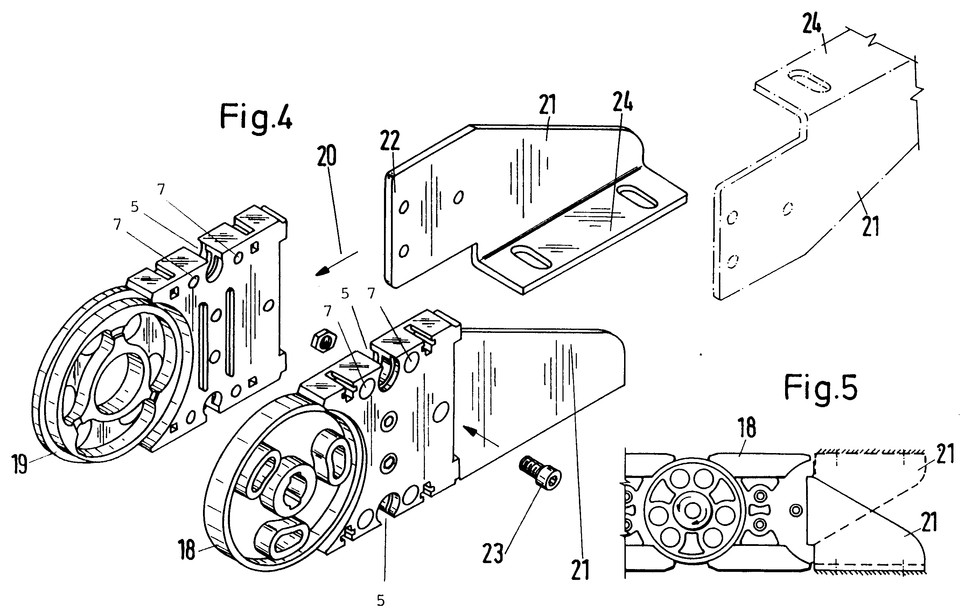

- Fig. 4: zwei Endglieder mit dazu passenden Anschlagstücken in perspektivischer Darstellung;
- Fig. 5: ein Endglied in Seitenansicht;

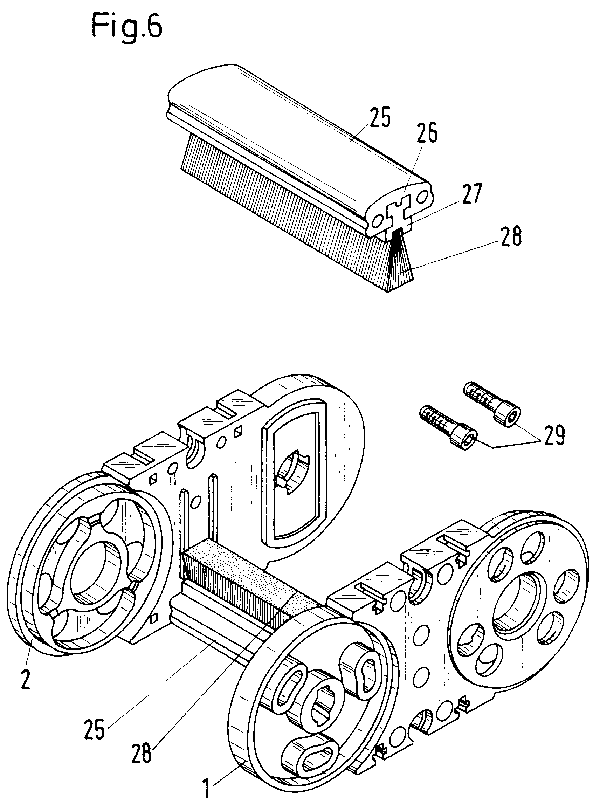

- Fig. 6: ein Sprengbild eines Kettengliedes mit in den Traversen befestigten Bürsten in perspektivischer Darstellung;
- Fig. 7: ein Sprengbild eines Kettengliedes mit auf den Traversen befestigten Deckplatten in perspektivischer Darstellung;
- Fig. 8: dieselben Kettenglieder entlang der Linie VIII-VIII in Fig. 7 geschnitten in Ansicht von der Innenseite.

Ein Kettenglied besteht aus zwei in Abstand voneinander und parallel zueinander angeordneten Kettenlaschen 1 und 2, die mit Traversen 3 und 4 untereinander verbunden sind. Die Traverse 3 hat auf ihrer Gesamten Länge einen abgeflachten Querschnitt mit abgerundeten Schmelseiten und kann in mit Hinterschneidungen versehene angeschnittene Ausnehmungen 5 in den Schmalseiten der Kettenlaschen eingelegt und durch Verdrehen um ihre Längsachse kraft- und formschlüssig mit den Kettenlaschen 1,2 verbunden werden. Die andere Traverse 4 hat auf einer dem Abstand der beiden Kettenlaschen entsprechenden Länge einen asymmetrischen Querschnitt zur Vergrößerung der Stabilität der Energieführungskette. Damit sich die Traverse 4 nicht unbeabsichtigt lösen kann, sind Bohrungen 5 vorgesehen, in welche die Bohrungen 7 der Kettenlaschen 1,2 durchgreifende Schrauben eingedreht werden können.

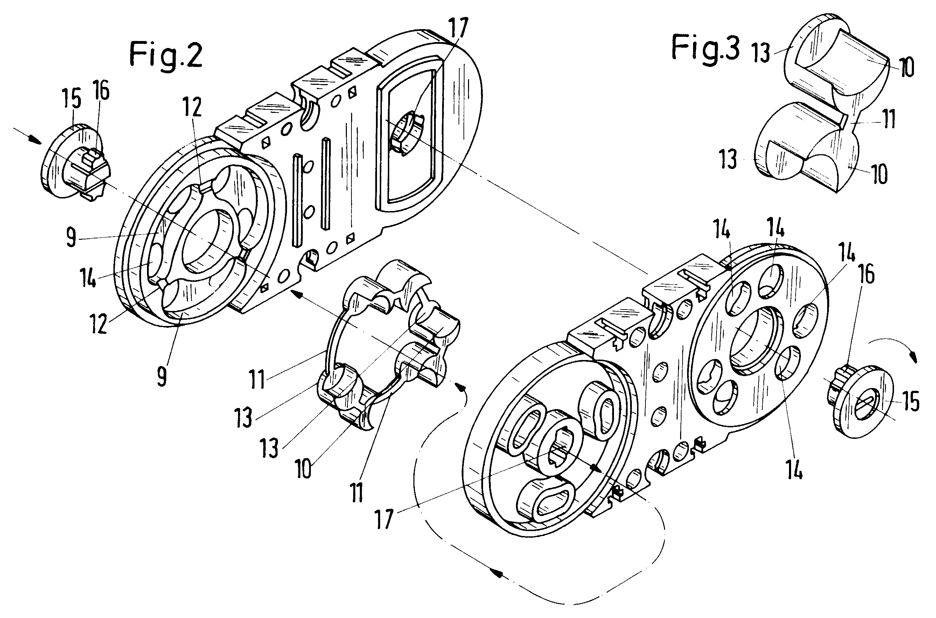

Der gegenseitige Schwenkwinkel benachbarter Kettenglieder wird durch Anschlagnocken 8 begrenzt, welche in gekrümmte Ausnehmungen 9 einer benachbarten Kettenlasche eingreifen. Die an einer Kettenlasche 1,2 angeformten Anschlagnocken 8 bzw. eingeformten Ausnehmungen 9 legen einen bestimmten, maximalen Schwenkwinkel fest, aus dem sich auch ein bestimmter Krümmungsradius für die Energieführungskette ergibt. Zur Verkleinerung des Schwenkwinkels bzw. Vergrößerung des Krümmungsradius können in die Ausnehmungen 9 Anschlageinsätze 10 eingelegt werden. Diese Anschlageinsätze sind bei dem in der Fig. 2 dargestellten Ausführungsbeispiel über Stege 11 zu einem Ring miteinander verbunden. Die Anschlageinsätze 10 können aber auch gemäß dem Ausführungsbeispiel in Fig. 3 nur paarweise mit einem Steg 11 verbunden sein, um Verwechslungen auszuschließen. Mit den Stegen 11 korrespondierende Ausnehmungen 12 sind in den Kettenlaschen 1,2 zwischen den Ausnehmungen 9 für die Anschlageinsätze 10 vorgesehen.

Die Anschlageinsätze 10 sind mit runden Köpfen 13 versehen, welche in entsprechend geformte runde Bohrungen 14 in den Ausnehmungen 9 eingreifen und von außen sichtbar sind.

Zusammengehalten werden zwei Kettenglieder mit in die Gelenkachse einsetzbaren Verriegelungsbolzen 15, die mit federnd angeordneten Verriegelungsnocken in Gelenkbohrungen 17 an einem Ende der Kettenlaschen 1,2 einrastbar sind.

Das erste und das letzte Kettenglied einer Energieführungskette besteht aus zwei Endgliedern 18,19, die an einem Ende abgeschnitten und mit einer Tasche 20 versehen sind, in welche ein Anschlußstück 21 mit einem entsprechenden Einsteckende 22 einsteckbar ist und mit einer Schraube 23 befestigt werden kann. Die Anschlußstücke 21 können unterschiedlich geformte Anschlußenden 24 haben, die den jeweiligen Gegebenheiten angepasst sind.

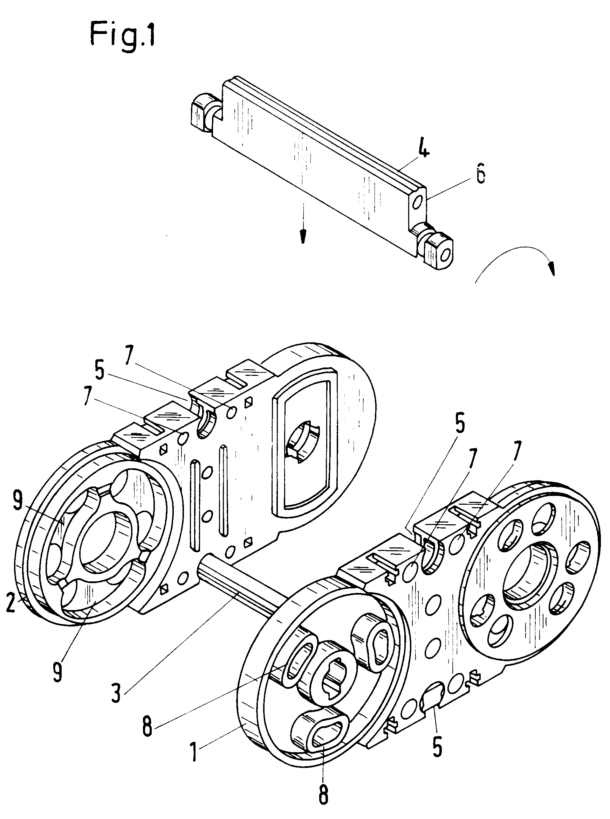

Anstelle der Traversen 3,4 gemäß der Fig. 1 können auch verbreiterte Traversen 25 mit einer auf der Innenseite angeordneten, T-förmigen Nut 26 verwendet werden, in die eine Halterung 27 für eine Bürste 28 eingeschoben ist. Die beiden Traversen 25 sind mit Schrauben 29 an den Kettenlaschen 1,2 befestigt. Die beiden nach innen ragenden Bürsten 28 enden beiderseits der neutralen Ebene der Kettenglieder und können Energieleitungen mit extrem verschiedenen Durchmessern schonend und getrennt voneinander festhalten.

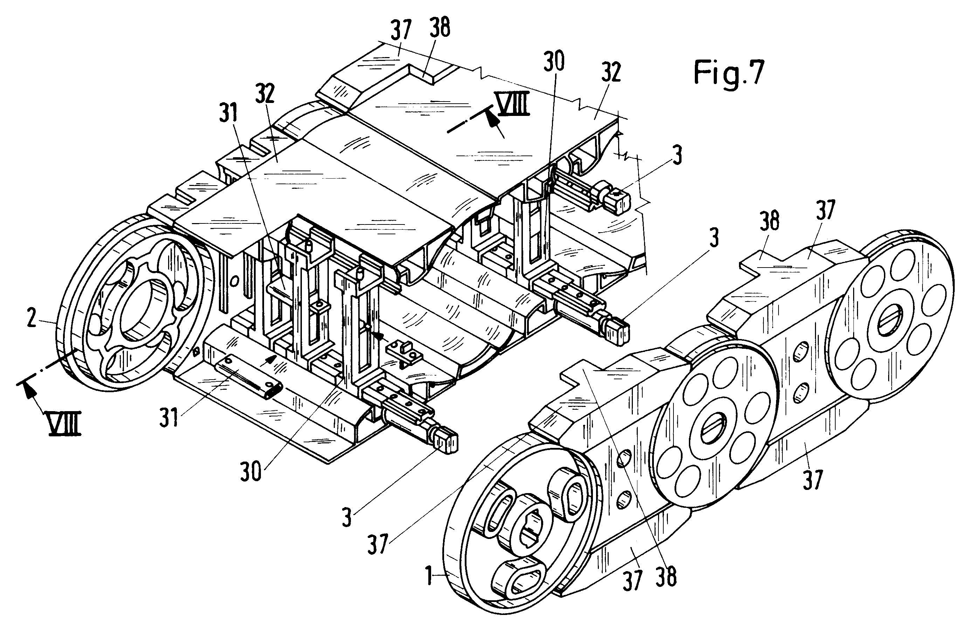

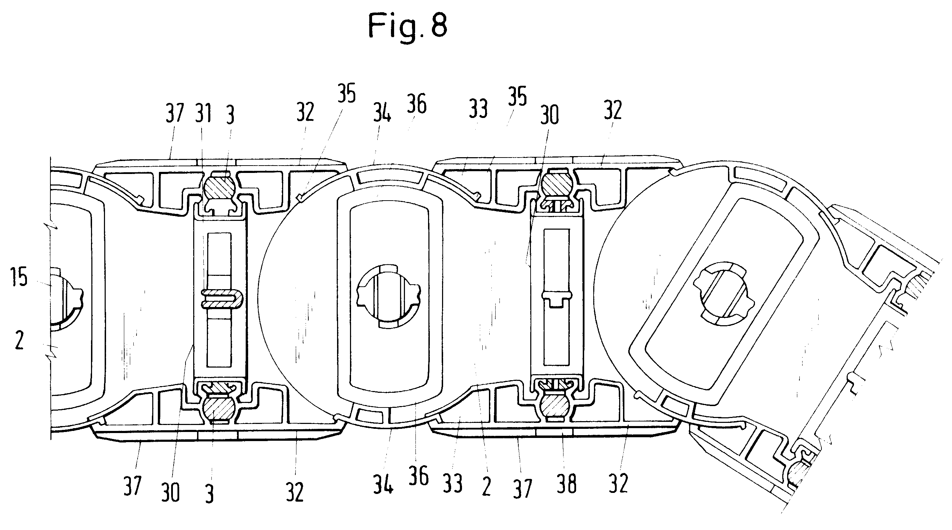

Bei der in den Fig. 7 und 8 dargestellten Ausführungsform sind zwischen den Traversen 3 Trennstege 30 mit Sprossen 31 eingesetzt. Außerdem sind auf den Traversen 3 Deckplatten 32 befestigt, die an einer Längsseite zweischalig ausgebildet sind und einen Aufnahmeschlitz 33 für ein gekrümmtes Abdeckelement 34 bilden. Die gekrümmten Abdeckelemente 34 sind an beiden Enden mit Anschlagleisten 35 versehen, welche einerseits nicht aus dem Aufnahmeschlitz 33 herausrutschen können und auf der anderen Seite die benachbarte Deckplatte 32 untergreifen. Mit ihren Stirnseiten liegen die Abdeckelemente 34 an den Kettenlaschen 1 und 2 angeformten Abstützprofilen 36 an.

Bei der in den Fig. 7 und 8 dargestellten, abgedeckten Energieführungskette sind auf die Schmalseiten der Kettenlaschen 1 und 2 Gleitkufen 37 aufgesteckt, die mit einem nach innen weisenden Vorsprung 38 zum Niederhalten der Deckplatten 32 versehen sind.

### Bezugszeichenliste

- 1: Kettenlasche
- 2: Kettenlasche
- 3: Traverse
- 4: Traverse
- 5: Ausnehmungen
- 6: Bohrungen
- 7: Bohrungen
- 8: Anschlagnocken
- 9: Ausnehmung
- 10: Anschlageinsatz
- 11: Steg
- 12: Ausnehmung
- 13: Kopf
- 14: Bohrung
- 15: Verriegelungsbolzen
- 16: Verriegelungsnocken
- 17: Gelenkbohrung
- 18: Endglied
- 19: Endglied
- 20: Tasche
- 21: Anschlußstück
- 22: Einsteckende
- 23: Schraube
- 24: Anschlußende
- 25: Traverse
- 26: Nut
- 27: Halterung
- 28: Bürste
- 29: Schrauben
- 30: Trennsteg
- 31: Sprosse
- 32: Deckplatte
- 33: Aufnahmeschlitz
- 34: Abdeckelement
- 35: Anschlagleiste
- 36: Abstützprofil
- 37: Gleitkufen
- 38: Vorsprung

## Patentansprüche

1. Bausatz mit mehreren Bausatzelementen für eine an mehrere Anwendungsfälle anpaßbare Energieführungskette, enthaltend jeweils zwei Kettenlaschen (1,2) aufweisende Kettenglieder und mindestens ein Kettenendglied (18, 19), das Gelenkabschnitte zum Anlenken an einem anderem Kettenglied und einem Anschlußelement aufweist,
**gekennzeichnet durch**
folgende weitere Bausatzelemente:
a) Traversen (3, 4, 25), die mit einem zwischen den Kettenlaschen (1,2) befindlichen Bereich vergrößerten Querschnitts in asymmetrischer oder symmetrischer Form versehen sind;
b) Bürsten (28), die in Verbindung mit Traversen (3, 4, 25) angebracht sind und nach innen vorspringende Borsten aufweisen;
c) Anschlußstücke (21), die mit einem Ende in Taschen (20) der Kettenendglieder (18, 19) passend einsteckbar sind;
d) Trennstege (30), die an den Traversen (3, 4, 25) befestigbar sind und
e) Sprossen (31), die in Querrichtung zu den Trennstegen (30) angeordnet werden können;
f) Gleitkufen (37), die auf Schmalseiten der Kettenlaschen (1,2) aufsteckbar sind;
g) Anschlageinsätze (10), die in korrespondierende Ausnehmungen (9) der Kettenlaschen (1,2) ortsfest eingreifen und mindestens paarweise über Stege (11) miteinander verbunden sind; und
h) Deckplatten (32), die an den Traversen (3,4) befestigt sein und
i) Abdeckelemente (34) aufweisen können, die gekrümmt und teleskopartig angeordnet sind.

2. Bausatz nach Anspruch 1, dadurch gekennzeichnet, daß die Traversen (25) an ihrer Innenseite mit einer T-förmigen Nut (26) versehen sind und/oder auf ihrer gesamten Länge einen abgeflachten Querschnitt mit abgerundeten Schmalseiten aufweisen.

3. Bausatz nach Anspruch 2, dadurch gekennzeichnet, daß die Traversen (3, 4, 25) in mit Hinterschneidungen versehene angeschnittene Ausnehmungen (5) in den Schmalseiten der Kettenlaschen (1, 2) einlegbar und durch Verdrehen um ihre Längsachse kraft- und formschlüssig damit verbindbar sind.

4. Bausatz nach Anspruch 2, dadurch gekennzeichnet, daß in die T-förmige Nut (26) Bürsten (28) einsetzbar sind, um Energieleitungen mit verschiedenen Durchmessern getrennt voneinander zu halten.

5. Bausatz nach Anspruch 1, dadurch gekennzeichnet, daß die Anschlußstücke (21) unterschiedlich geformte, den Kettengliedern entsprechende Anschlußenden aufweisen.

6. Bausatz nach Anspruch 1, dadurch gekennzeichnet, daß die Trennstege (3) mit den Sprossen (31) zwischen den Traversen (3, 4, 25) einsetzbar sind.

7. Bausatz nach Anspruch 1, dadurch gekennzeichnet, daß die Gleitkufen jeweils mit einem nach innen weisenden Vorsprung (38) zum Niederhalten der Deckplatte (32) versehen sind.

8. Bausatz nach Anspruch 1, dadurch gekennzeichnet, daß die Anschlageinsätze (10) mit runden Köpfen (13) in runde Bohrungen (14) der Kettenlaschen (1, 2) eingreifen.

9. Bausatz nach Anspruch 1, dadurch gekennzeichnet, daß jede Deckplatte (32) an einer Seite zweischalig ausgebildet ist und einen Aufnahmeschlitz (33) für ein gekrümmtes Abdeckelement (34) hat.

10. Bausatz nach Anspruch 1, dadurch gekennzeichnet, daß das gekrümmte Abdeckelement (34) an beiden Seiten mit Anschlagleisten (35) versehen ist.

11. Bausatz nach den Ansprüchen 1, 9 und 10, dadurch gekennzeichnet, daß an den Innenseiten der Kettenlaschen (1, 2) ein Abstützprofil (36) für die gekrümmten Abdeckelemente (34) angeformt ist.

12. Energieführungskette, enthaltend jeweils zwei Kettenlaschen (1, 2) aufweisende Kettenglieder und mindestens ein Kettenglied (18, 19), das Gelenkabschnitte zum anlenken an einem anderen Kettenglied und einem Anschlußelement aufweist dadurch gekennzeichnet, daß sie mit mindestens einem der weiteren Bausatzelemente gemäß Anspruch 1, die mit zwei Kettenlaschen (1, 2) aufweisenden Kettengliedern und mindestens einem Kettenendglied (18, 19), das Gelenkabschnitte zum Anlenken an einem anderen Kettenglied und ein Anschlußelement aufweist, versehen und komplettiert ist.

## Claims

1. A kit comprising a plurality of components for an energy carrier chain which can be adapted to a plurality of situations of use, including chain link members each having two chain plates (1, 2) and at least one chain end link member (18, 19) which has pivot portions for pivotal connection to another chain link member and to a connecting element, characterised by the following further components:
a) transverse portions (4, 25) which are provided with a region of enlarged cross-section, that is disposed between the chain plates (1, 2), of asymmetrical or symmetrical form;
b) brushes (28) which are mounted in conjunction with transverse portions (4, 25) and have inwardly projecting bristles;
c) connecting portions (21) which can be suitably fitted with one end into pockets (20) in the chain end link members (18, 19);
d) dividing webs (30) which can be fixed to the transverse portions (3, 4, 25), and
e) crossbar members (31) which can be arranged in the transverse direction relative to the dividing webs (30);
f) sliding skids (37) which can be fitted on to narrow sides of the chain plates (1, 2);
g) stop inserts (10) which stationarily engage into corresponding openings (9) in the chain plates (1, 2) and which are connected together at least in pairs by way of webs (11); and
h) cover plates (32) which can be fixed to the transverse portions (3, 4) and
i) can have cover elements (34) which are curved and arranged telescopically.

2. A kit according to claim 1 characterised in that the transverse portions (25) are provided at their inside with a T-shaped groove (26) and/or over their entire length are of a flattened cross-section with rounded-off narrow sides.

3. A kit according to claim 2 characterised in that the transverse portions (3, 4, 25) can be fitted into openings (5) which are cut out in the narrow sides of the chain plates (1, 2) and which are provided with undercut portions, and can be force-lockingly and positively lockingly connected thereto by rotation about their longitudinal axis.

4. A kit according to claim 2 characterised in that brushes (28) can be fitted into the T-shaped groove (26) in order to hold energy lines of different diameters separated from each other.

5. A kit according to claim 1 characterised in that the connecting portions (21) have connecting ends which are of different shapes and which correspond to the chain link members.

6. A kit according to claim 1 characterised in that the dividing webs (3) can be inserted with the crossbar members (31) between the transverse portions (3, 4, 25).

7. A kit according to claim 1 characterised in that the sliding skids are each provided with an inwardly facing projection (38) for holding down the cover plate (32).

8. A kit according to claim 1 characterised in that the stop inserts (10) engage with round heads (13) into round bores (14) in the chain plates (1, 2).

9. A kit according to claim 1 characterised in that each cover plate (32) is of a two-shell configuration at one side and has a receiving slot (33) for a curved cover element (34).

10. A kit according to claim 1 characterised in that the curved cover element (34) is provided with stop bars (35) at both sides.

11. A kit according to claims 1, 9 and 10 characterised in that a support profile portion (36) for the curved cover elements (34) is formed on the insides of the chain plates (1, 2).

12. An energy carrier chain comprising at least one of the further kit components according to claim 1, which is provided and completed with chain link members having two chain plates (1, 2) and at least one chain end link member (18, 19) which has pivotal portions for pivotal connection to another chain link member and a connecting element.

## Revendications

1. Jeu de pièces détachées comportant plusieurs éléments destiné à une chaîne de transmission d'énergie que l'on peut adapter à plusieurs usages et comprenant des maillons de chaîne comportant chacun deux éclisses de chaîne (1, 2) ainsi qu'un maillon d'extrémité de chaîne (18, 19) au moins qui possède des segments d'articulation destiné à l'articulation avec un autre maillon de chaîne et un élément de jonction
caractérisé par
les autres éléments de jeu de pièces suivants :
a) des traverses (4, 25) pourvues d'une zone située entre les éclisses de chaîne (1, 2) de section agrandie de forme asymétrique ou symmétrique ;
b) des brosses (28) qui sont montées en liaison avec des traverses (4, 25) et qui possèdent des soies dirigées vers l'intérieur ;
c) des pièces de jonction (21) que l'on peut emboîter de façon ajustée par une extrémité dans des poches (20) des éléments d'extrémité de chaîne (18, 19) ;
d) des entretoises de séparation (30) que l'on peut fixer sur les traverses (3, 4, 25) et
e) des éparts (31) qui peuvent être placés perpendiculairement aux entretoises de séparation (30) ;
f) des patins de glissement (37) qui peuvent être fixés sur la tranche des éclisses de chaîne (1, 2) ;
g) des inserts de butée (10) qui s'engagent de façon fixe dans des évidements correspondants (9) des éclisses de chaîne (1, 2) et qui sont reliés entre eux au moins par paires par l'intermédiaire d'entretoises (11) ; et enfin
h) des plaques de couverture (32) qui peuvent être fixées aux traverses (3, 4) et
i) présenter des éléments de couverture (34) qui sont recourbés et sont disposés de façon télescopique.

2. Jeu de pièces détachées selon la revendication 1, caractérisé en ce que les traverses (25) possèdent sur leur face intérieure une rainure (26) en forme de T et/ou présentent sur toute leur longueur une section transversale aplatie avec une tranche arrondie.

3. Jeu de pièces détachées selon la revendication 2, caractérisé en ce que les traverses (3, 4, 25) peuvent être insérées dans des évidements (5) taillés en surface possédant des contre-dépouilles et situés dans la tranche des éclisses de chaîne (1, 2) et peuvent y être reliés solidairement par crabotage par rotation autour de leur axe longitudinal.

4. Jeu de pièces détachées selon la revendication 2, caractérisé en ce que des brosses (28) peuvent être insérées dans la rainure en forme de T (26) afin de maintenir séparées l'une de l'autre des transmissions d'énergie ayant des diamètres différents.

5. Jeu de pièces détachées selon la revendication 1, caractérisé en ce que les pièces de jonction (21) possèdent des embouts de jonction ayant des formes différentes correspondant aux maillons de chaîne.

6. Jeu de pièces détachées selon la revendication 1, caractérisé en ce que les entretoises de séparation (3) possédant les éparts (31) peuvent être insérées entre les traverses (3, 4, 25).

7. Jeu de pièces détachées selon la revendication 1, caractérisé en ce que tous les patins de glissement possèdent une saillie (38) dirigée vers l'intérieur destinée à maintenir la plaque de couverture (32).

8. Jeu de pièces détachées selon la revendication 1, caractérisé en ce que les inserts de butée (10) ayant des têtes rondes (13) s'engrènent dans des trous forés (14) ronds des éclisses de chaîne (1, 2).

9. Jeu de pièces détachées selon la revendication 1, caractérisé en ce que chaque plaque de couverture (32) est réalisée d'un côté avec deux parois et possède une fente de réception (33) destinée à un élément de couverture recourbé (34).

10. Jeu de pièces détachées selon la revendication 1, caractérisé en ce que l'élément de couverture recourbé (34) est pourvu des deux côtés de baguettes de butée (35).

11. Jeu de pièces détachées selon les revendications 1, 9 et 10, caractérisé en ce qu'un profil d'appui (36) destiné aux éléments de couverture recourbés (34) est réalisé sur la face interne des éclisses de chaîne (1, 2).

12. Chaîne de transmission d'énergie munie en complément d'au moins un des autres éléments du jeu de pièces détachées selon la revendication 1, de maillons de chaîne ayant deux éclisses de chaîne (1, 2) et au moins un élément d'extrémité de chaîne (18, 19) qui possède des segments d'articulation destinés à être reliés à un autre maillon de chaîne ainsi qu'un élément de jonction.
